# EUROPEAN PATENT SPECIFICATION

(11) **EP 3 614 829 B1**
(45) Date of publication and mention of the grant of the patent: **27.10.2021**
(21) Application number: 18726219.1
(22) Date of filing: 24.04.2018
(51) Int. Cl.: A01G 9/02, A01G 31/02

(54) **SINGLE-PIECE FLOATING TRAY FOR HYDROPONIC CULTIVATION AND METHOD FOR HYDROPONIC CULTIVATION**
SCHWIMMENDE EINZELSTÜCKE FÜR DIE HYDROPONISCHE PFLANZENKULTUR UND VERFAHREN ZUR HYDROPONISCHEN PFLANZENKULTUR
PLATEAU FLOTTANT D'UNE PIÈCE POUR UNE CULTURE HYDROPONIQUE ET PROCÉDÉ DE CULTURE HYDROPONIQUE

(30) Priority: 27.04.2017 IT 201700045518
(43) Date of publication of application: 04.03.2020
(73) Proprietor: Ghirlanda, Damiano, 37045 Legnago (Verona) (IT); Ghirlanda, Martino, 41033 Concordia sulla Secchia (Modena) (IT)
(72) Inventor: Ghirlanda, Damiano, 37045 Legnago (Verona) (IT); Ghirlanda, Martino, 41033 Concordia sulla Secchia (Modena) (IT)
(74) Representative: Manfrin, Marta
(86) International application number: PCT/IB2018/052857
(87) International publication number: WO 2018/198035

(56) References cited:
- WO-A1-2005/025298
- WO-A1-2010/093248
- WO-A1-2014/077682
- WO-A2-2015/002529
- JP-A- H10 155 378

## Description

### TECHNICAL FIELD

The present disclosure relates to the apparatus used for hydroponic cultivation and more particularly to a single-piece floating tray for hydroponic cultivation.

### BACKGROUND

Hydroponic cultivation is a technique for performing soilless cultivation where the plants to be cultivated are irrigated with a nutritive chemical solution composed of water and the compounds needed to provide all the elements indispensable for normal mineral nutrition. Typically the plants are placed on a support arranged on the surface of the water or above it, the support being provided with holes through which the roots of the plant protrude so as to be immersed in the water.

Supports of this type are for example disclosed in the document 2. EP0167638A1 which illustrates a floating support for hydroponic cultivation, having a pad of hydrophobic material provided with through-holes, for allowing the roots which are growing to protrude, having small dimensions so as to favour capillary attraction.

Further floating supports for hydroponic cultivation are disclosed, for instance, in JPH10155378 WO2010/093248 and WO2014/077682.

### SUMMARY

The Applicant has noted a drawback of this support and of other known supports for hydroponic cultivation which consists in the fact that these supports are not suitable for housing bulbs or seedlings for the time needed for them to become completely mature plants. More particularly, the Applicant has noted that on the market today there exist floating supports, mainly for seed boxes, in which the bulb is in direct contact with the aqueous solution. As the plant grows and gains weight, the bulb becomes immersed in the said solution, with a considerable increase in the risk of rotting. In fact it has been noted that often it is required to remove the plants from these supports before they reach maturity in order to avoid the risk of rotting. Examining the causes which led to crop losses, the Applicant noted that, whilst growing, the plants which were not yet mature caused the support to sink too much because of their increased weight, moving so close to the water surface as to cause immersion of parts of the plant subject to rotting and preventing correct venting of the carbon dioxide produced by the roots of the said plants. These drawbacks arise even more so in hot periods where breathing of the roots is limited to only the oxygen dissolved in the water, which diminishes directly in proportion to the increase in temperature.

It has thus been understood that there exists the need to provide floating supports for hydroponic cultivations suitable for keeping the plant to be cultivated sufficiently close to the free surface of the water when the plant is relatively young, but always above the water at a minimum distance also when the plant has reached maturity, and suitable also for allowing continuous venting of the carbon dioxide produced by the roots of the plants. In fact, as a result of the support according to the present disclosure, the plant not only remains always raised above the surface of the water, but also benefits from the presence of recirculating air underneath the bulb, where the roots are able to perform their respiratory function, drawing in oxygen and eliminating carbon dioxide.

In addition, for cost-saving reasons and easier use, these supports are made as one piece and can be preferably stacked on top of each other.

In accordance with another aspect of the present disclosure, a method for hydroponic cultivation is provided whereby the plants or bulbs to be cultivated are housed inside housings of a single-piece floating tray so as to keep the roots of the plants at a minimum distance from the surface of the water and allow venting of the carbon dioxide produced by the roots.

All these objects are achieved with a single-piece floating tray for hydroponic cultivation as defined in claim 1, a use of the single-piece floating tray, and a method of hydroponic cultivation according to the respective independent claims. In particular, the entire structure of the platform, including the distance between the seats of the bulbs, the height of the platform, the through-holes for the roots, all constitute characteristics designed and optimized to ensure better oxygenation and the best possible growth of the plant in hydroponic cultivation conditions.

The invention is achieved according to the appended claims. Basically, a single-piece tray is provided, said tray being able to keep the plant at a distance from the water, and also a venting system for the carbon dioxide is provided between the plant and the surface of the water.

Preferably, each single-piece tray is realized by means of blow-moulding. The tray therefore has the form of a storage tank or closed casing.

### BRIEF DESCRIPTON OF THE DRAWINGS

Figure 1 shows the inner housing side of the single-piece floating tray according to an embodiment of the present disclosure, intended to contain bulbs and seedlings to be cultivated.
Figure 2 shows the outer side of the tray according to Figure 1, intended to be immersed in water.
Figures 3 and 4 are side view of the tray shown in Figure 1.
Figures 5, 6 and 7 are cross-sectional views of the tray along the lines shown in Figures 1 and 2.
Figures 8 and 9 show a view, similar to that of Figure 6, of the single-piece floating tray placed in a tank containing water, when the plant to be cultivated is first inserted inside the tray and when the plant has fully grown, respectively.
Figure 10 shows an alternative embodiment of the hole in a cultivation cell, with a peripheral notch.
Figure 11 shows a top plan view of the tray according to a second embodiment.
Figure 12 shows a top plan view of the detail II according to the embodiment of Figure 11.
Figure 13 shows a cross-sectional view of the detail II of Figure 10 along the line C-C of Figure 11.
Figure 14 shows a cross-sectional view of the detail II of Figure 10 along the line D-D of Figure 11.

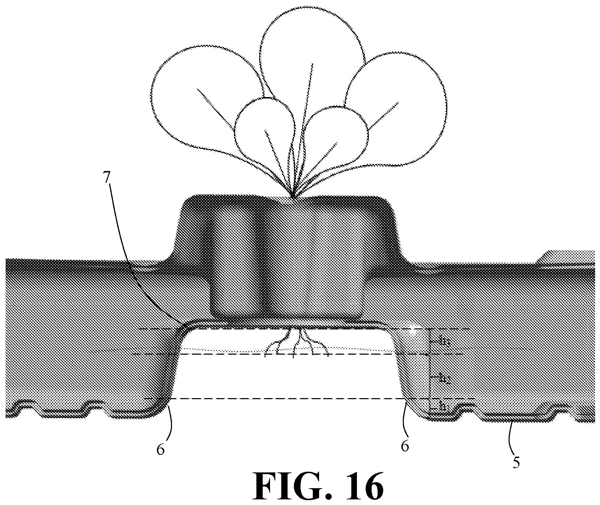

Figures 15 and 16 show a view, similar to that of Figure 13, of the single-piece floating tray placed in a tank containing water, when the plant to be cultivated is first inserted inside the tray and when the plant has fully grown, respectively.

### DETAILED DESCRIPTION

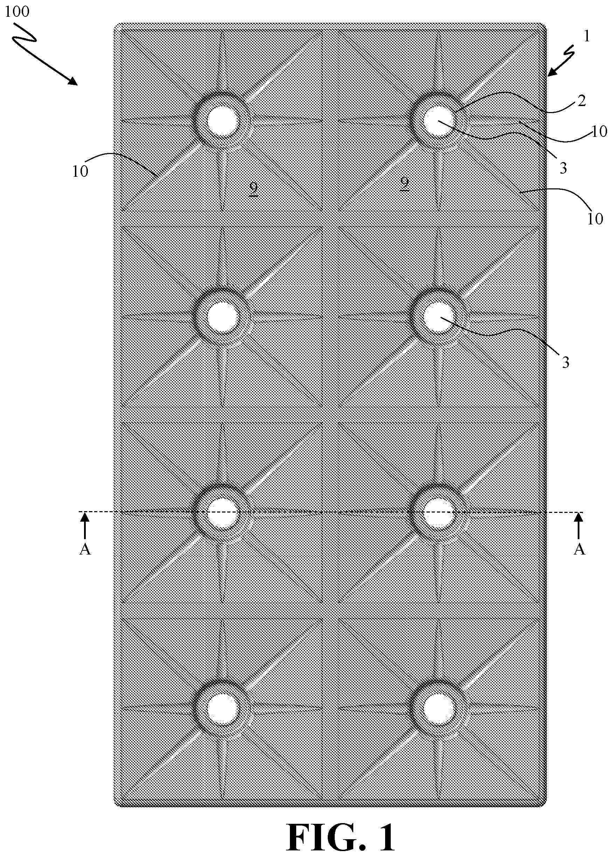

A first embodiment of a single-piece tray 100 for hydroponic cultivation according to the present disclosure is shown in Figures 1 to 9. It is shaped so as to define a plurality of identical cultivation cells 1.

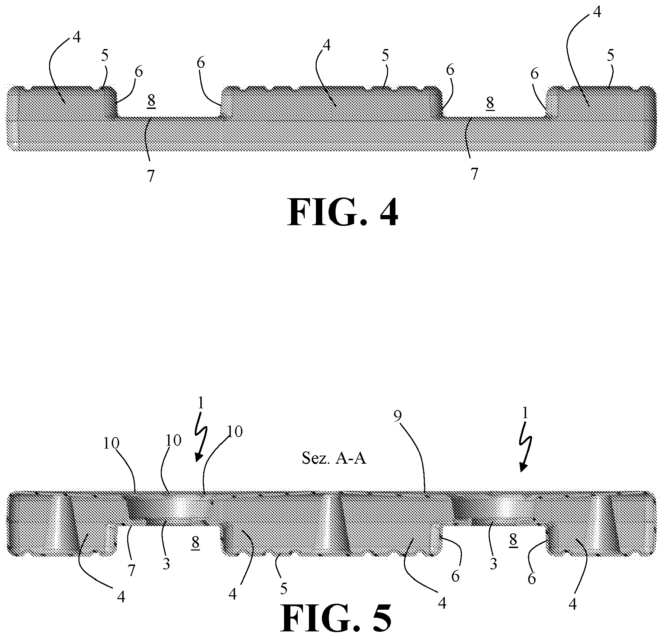

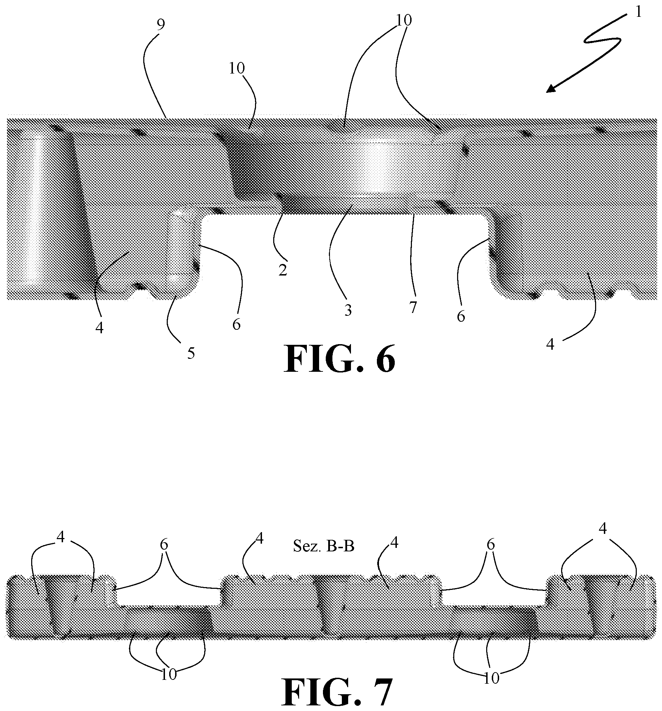

As can be understood more clearly from the cross-sectional view in Figures 5 and 6, each cell 1 has a housing 2 which defines a raised plane 7 and is configured to receive and support a bulb or a seedling to be grown. The housing 2 has a hole 3 with dimensions such as to support the bulb or plant to be grown without allowing it to fall through, keeping it suspended so that the roots may protrude below the tray 100 and, while growing, may become immersed in the water on which the tray 100 is floating.

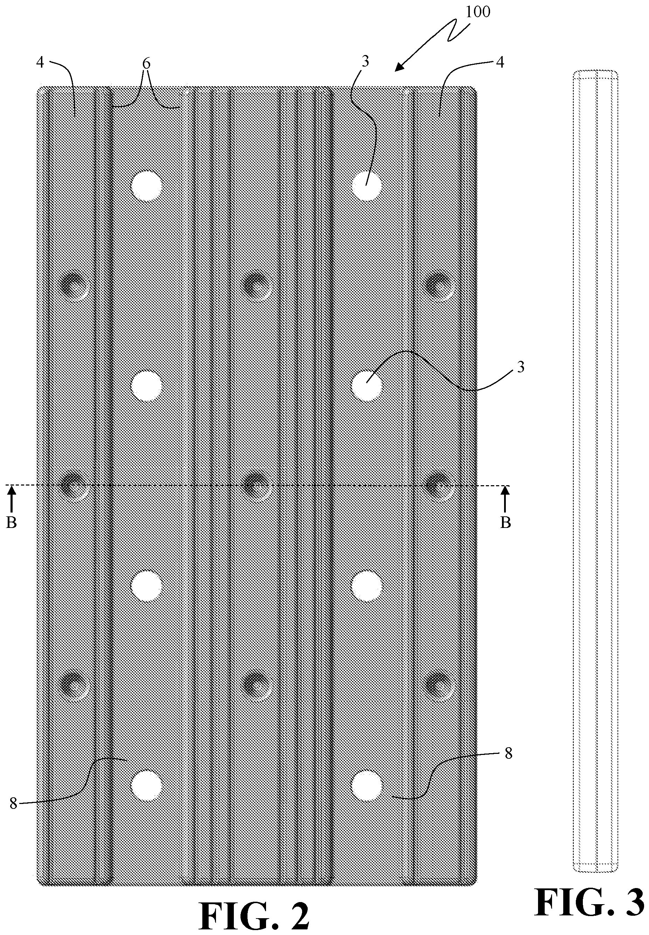

In order to be able to float in a tank filled with water, each cultivation cell has a buoyant portion 4 which defines a lowered plane 5 intended to sink below the waterline. The buoyant portions 4 are connected to the overlying housings 2 by means of side walls 6 which connect the lowered plane 5 to the raised plane 7. The side walls 6 extend as far as at least one free edge of the single-piece tray 100, defining a channel 8 which communicates with the space outside the tray 100. Preferably, as can be seen in Figure 2, both the side walls 6 extend as far as the perimetral edges of the single-piece tray 100. In fact, the side walls 6 are not confined to the buoyant portions 4, nor do they enclose the buoyant portion so as to form a cavity confined within the single piece on all sides.

In other words, the side walls 6 define a channel 8 which communicates directly with the space outside that subtended by the tray 100, i.e. the channel 8 extends as far as an edge, or more preferably extends between opposite walls or edges of the single-piece tray, and is not limited by opposite outer walls of the tray 100.

In other words, the channel is an indentation on the side where the lowered plane is situated. The indentation extends as far as the perimeter or free edge of the tray.

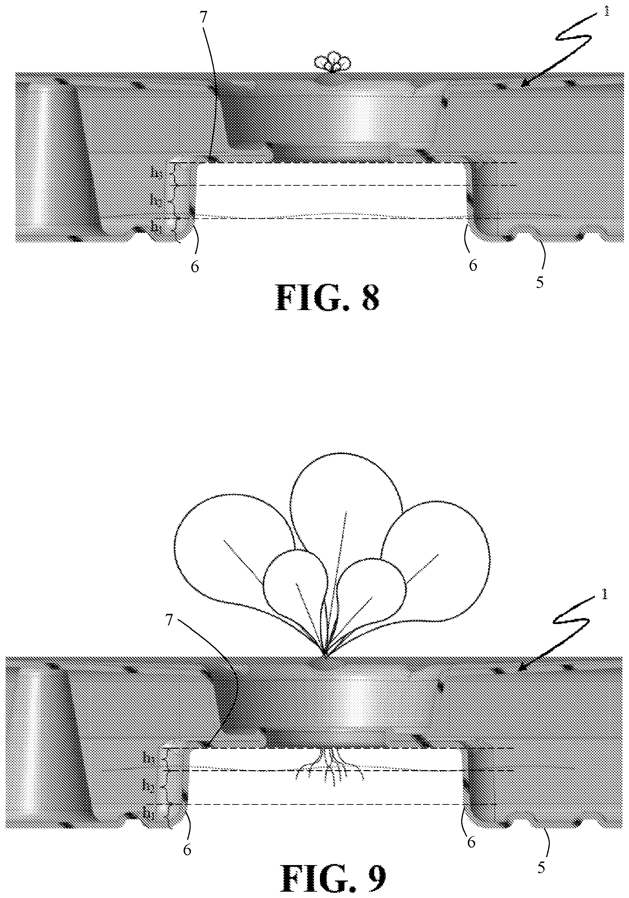

The buoyant portions have been designed to allow the tray 100 to float on the water, while maintaining a suitable distance between the seedling to be grown and the surface of the water, even when the plant has reached maturity. In greater detail, adopting the terminology used for boats, each buoyant portion for each single cultivation cell defines:
- a first volume with a first height h₁, which forms the "bottomside" of the tray 100;
- a second volume with a second height h₂, which forms the "waterline zone" of the tray 100;
- a third volume with a third height h₃, which forms the "topside" of the tray 100;
wherein the sum of the first height h₁, second height h₂ and third height h₃ will be equal to the height of the side walls 6 which connect the lowered plane 5 to the raised plane 7. With reference to Figures 8 and 9 it can be seen how the first volume is intended to remain below the waterline until a bulb or seedling to be cultivated is placed inside the respective cultivation cell. In this situation, the weight acting on the cultivation cell is minimal and corresponds to the weight of a quantity of water equal to the first volume. As the plant grows, its weight increases and consequently the tray 100 sinks more and more. When the plant reaches maturity, the second volume is also situated underneath the waterline and the weight of the mature plant corresponds to the weight of a quantity of water equivalent to the sum of the first and second volumes.

Consequently, when the plant has reached maturity, the hole 3 will be separated from the waterline by a distance equal to the aforementioned third height h₃. Since the housing 2 inside which the plant is placed until maturity remains above the waterline by at least the amount of the third height h₃, which may be defined as required, the floating tray 100 according to the present disclosure may be used for the entire duration of the cultivation without the risk of the plant rotting.

In addition, since the housing 2 in which the plant is placed always remains above the waterline, the water does not manage to occupy the entire volume subtended by the channel 8. In other words, the water does not close up the channel, but a gap or free space remains between the waterline and the housing 2. The channel 8 is therefore not filled completely by the water. In this way, it is possible to provide a passage for gas or a vent between each housing 2 and a space outside the floating tray 100.

In this way, owing to the fact also that the channel 8 communicates directly with the outside, i.e. is not further confined by the outer walls of the tray 100, the carbon dioxide produced by the plant roots is continuously vented. Advantageously this reduces the risk of rotting or suffocation of the plant roots and improves oxygenation of the water. When the bulbs or seedlings to be grown are positioned in the housings of the cultivation cells of the floating tray 100, the roots of the seedlings (or bulbs, if they have them) in general will be shorter than the sum of the aforementioned second height h₂ and third height h₃ and will not manage to reach the surface of the water on which the tray 100 floats, so that the bulb or seedling must be irrigated from above.

The housings 2 of the cultivation cells 1 are surmounted at the top by respective shelves 9 provided with holes and grooves 10. The grooves 10 of each shelf 9 with holes are arranged radially around the hole 3 of the respective housing 2 and define a slope so as to convey water sprayed on top of the cell and cause it to fall above the hole 3, irrigating the bulb or seedling placed on it.

Initially, each bulb or seedling is irrigated from above, this increasing the cultivation costs. When the roots grow, they will be immersed directly in the water on which the tray 100 is floating: irrigation from above will then be interrupted since the plant will obtain its nutrition from the roots immersed in the water.

The distance between the raised plane 7 of a housing 2 and the lowered plane 5 of the respective buoyant portion 4, which corresponds to the height of the side walls 6, is calculated so as to keep the hole 3 as close as possible to the surface of the water, in order to reduce as far as possible the irrigation time, such that the plant, when fully mature, is not drowned in water.

The dimensions of the housings 2 of the cultivation cells 1 will be determined depending on the surface area needed for the bulb or seedling to be grown. The distance between the housings 2 may depend on the product which is to be matured and this will limit the maximum number of cultivations cells 1 in each tray 100. Knowing the weight of the empty tray 100, by estimating the weight of all the bulbs and seedlings to be grown and of all the plants in the tray 100 once they have reached maturity, it will then be possible to define the buoyant portions 4 of each cultivation cell so that the aforementioned third "topside" height h₃ is greater than a minimum value, in order to prevent rotting of the plant, and so that second "waterline" height h₂ is as small as possible, so as to be able to interrupt as soon as possible irrigation of the plants from above.

According to one embodiment, the first "bottomside" height h₁ will be between 6 mm and 8 mm and preferably equal to about 7 mm; the second "waterline" height h₂ will be determined so that the sum of said height with the first "bottomside" height h₁ will be between 20 mm and 40 mm and preferably equal to 29 mm; the third "topside" height h₃ of the tray 100 will be between 6 mm and 8 mm and preferably will be equal to about 6.5 mm.

As mentioned above, below the housing 2 of each cultivation cell 1 there is defined an empty space between the raised plane of the housing 2 and the lowered plane 4 of the buoyant portion, which is sufficiently broad to allow aeration of the plant roots. According to a non-limiting embodiment, conveniently the buoyant portions 4 of the cultivation cells 1 will be aligned in a row so as to create, underneath the holes 3, channels 8 which cross the tray 100 from one side to the other, allowing circulation of the air when the tray is floating on the water. According to an embodiment, the width of these channels is between 60 mm and 90 mm and preferably it is equal to 75 mm. If these channels 8 were not present, airtight islands would be created underneath each bulb: on the one hand this would improve the floatability of the platform and reduce the height both of the "bottomside" h₁ and of the "waterline zone" h₂, but it would adversely affect the recirculation of air for the roots underneath the seat of the bulb.

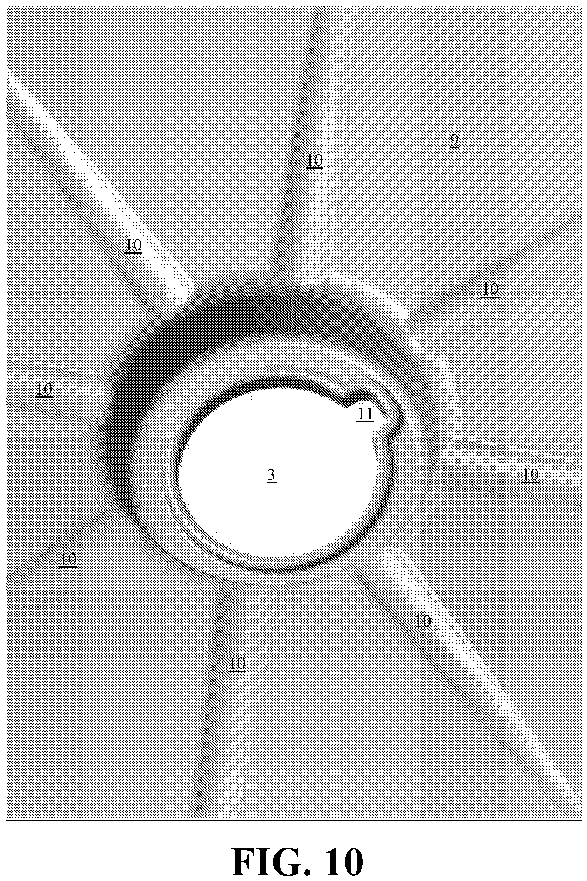

According to an embodiment shown in Figure 10, the hole 3 of the housing 2 intended to receive the plant until it matures has a substantially circular shape with a peripheral notch 11. This notch 11 forms a further vent for facilitating the dispersion of carbon dioxide which the roots produce naturally, preventing the risk of suffocation of the plant.

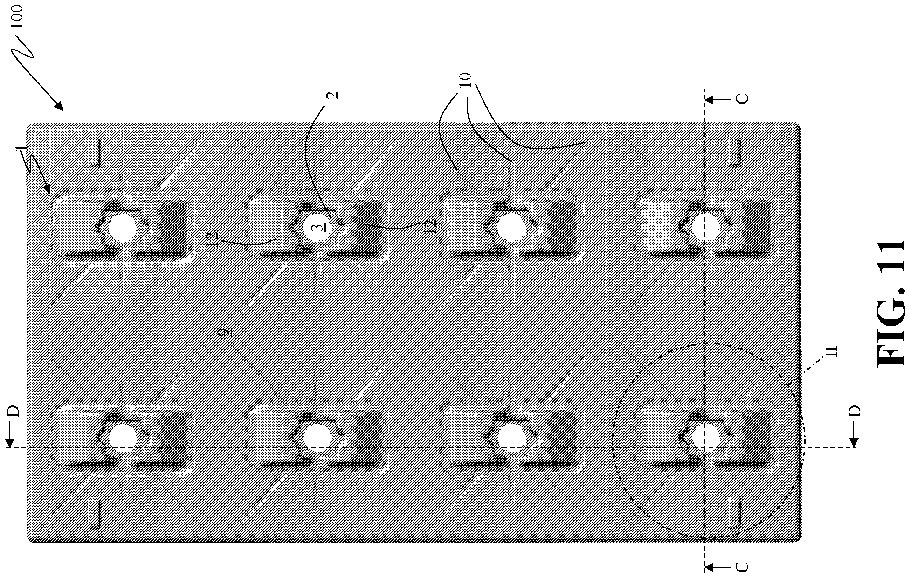

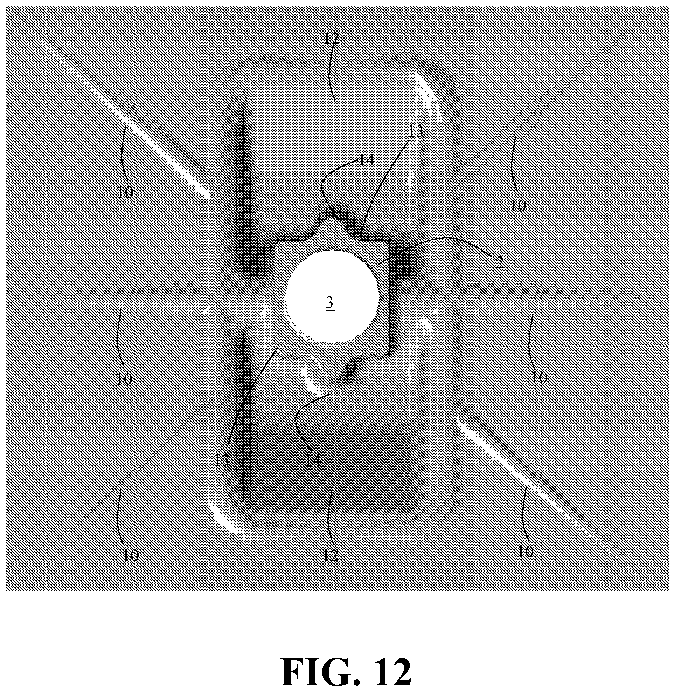

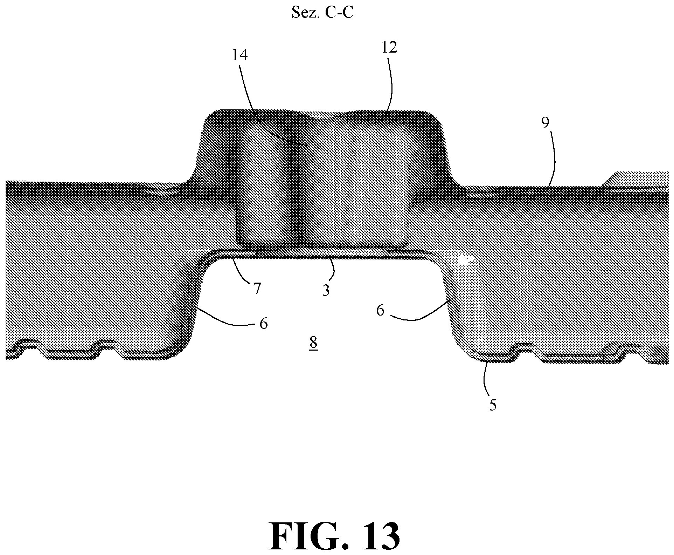

Figures 11-13 show a second embodiment of the single-piece tray 100 according to the present disclosure. This second embodiment differs from the first embodiment in that each housing 2 is also at least partially enclosed between protruding elements 12 which extend upwards from the surface 9 with holes of the tray 100. The protruding elements 12 are preferably separated, i.e. spaced, from each other so as to allow direct access to the housing 2 laterally and so as to allow the water from the grooves 10 to reach the hole 3 inside the housing 2. Even more preferably the protruding elements 12 are situated opposite each other relative to the housing 2 so as to retain and support the bulb or the seedling during the whole growth period. Moreover, preferably, in order to favour further supporting of the bulb or the seedling, the inner walls 13 of the protruding elements, namely the walls delimiting the housing 2, are substantially perpendicular to the raised plane 7. Finally, the inner walls 13 of the protruding elements 12 may comprise vertical grooves 14 inside which, during use, the operator is able to insert a finger when the clod is placed inside the housing 2.

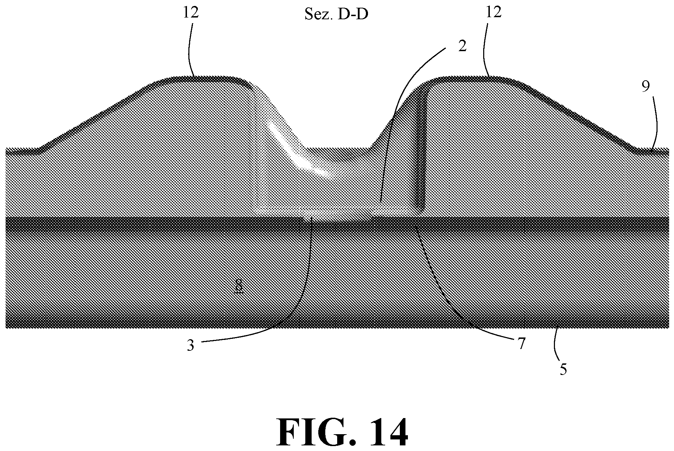

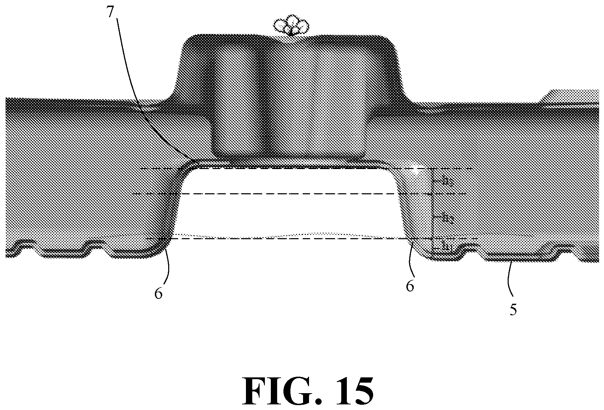

Figures 14 and 15 show the three heights h₁, h₂, h₃ with reference to the second embodiment.

The distance between the holes 3 of the housings 2 for the bulbs and seedlings to be grown will be conveniently calculated so as to optimize fully the useful spaces, considering also the fact that the tray 100 according to the present invention is designed to accommodate different plants. The holes 3 of the housings 2 are spaced so that, once the plants reached maturity, they are sufficiently spaced from each other so as not to hinder their natural growth.

The tray 100 for hydroponic cultivation may be easily provided with dimensions such that it can be used for different types of plant, including those which are characterized by final weights which are substantially different from each other, namely when the plants are mature and ready for harvesting. Depending on the expected final weight of the mature plant, the amount by which the trays 100 will sink below the waterline will be estimated and the height of the walls 6 determined accordingly so that the plants are not drowned in water and do not rot.

The single-piece floating tray 100 according to the present disclosure will be preferably made using a process for blow-moulding non-toxic plastic suitable for coming into direct contact with food, such as HDPE, PP, LDPE, etc. By using the blow-moulding technique it is possible to obtain, at a lower cost compared to alternative techniques (such as rotational moulding), a single-piece body in the form of a closed tank or closed casing which is internally hollow and has a broad outer surface. In fact, the single-piece floating tray 100 thus obtained is an internally hollow body, namely only air is present inside it. Advantageously, with the blow-moulding technique it is also possible to obtain walls of the single-piece tray which have a thickness of between about 1 mm and about 4 mm.

## Claims

1. A single-piece tray (100) for hydroponic cultivation, composed of a plastic material shaped so as to define inside the tray a plurality of identical cultivation cells (1), each cultivation cell (1) having:
a housing (2) defining a raised plane (7) and configured to house a bulb or seedling to be cultivated, said housing (2) having a hole (3) with dimensions such as to support the bulb or seedling to be cultivated without letting it fall through, while allowing its roots to protrude below the tray;
a buoyant portion (4) defining a lowered plane (5) intended to sink below a waterline when the tray is placed on the water, said portion being delimited by side walls (6) which extend upwards from the lowered plane (5) and are connected to said raised plane (7), each buoyant portion (4) defining:
- a first inner volume with a first height (h₁), designed to remain below the waterline as soon as the bulb or seedling to be cultivated is placed in the cultivation cell,
- a second inner volume with a second height (h₂), configured to remain above the waterline when the bulb or seedling to be cultivated is placed in the cultivation cell and to sink below the waterline completely when the bulb or seedling to be cultivated has become a mature plant,
- a third inner volume with a third height (h₃), configured to remain above the waterline when the bulb or seedling to be cultivated has become a mature plant;
the sum of said first height (h₁), second height (h₂) and third height (h₃) corresponding to a height of the side walls (6) between said raised plane (7) and said lowered plane (5) and wherein said side walls (6) extend as far at least one free edge of the single-piece tray (100) and define a channel (8) which communicates with a space outside the single-piece tray (100).

2. The single-piece tray (100) according to claim 1, wherein the side walls (6) extend respectively towards opposite edges of the tray and said channel (8) extends between two opposite free edges of the single-piece tray (100).

3. The single-piece tray (100) according to claim 1 or 2, wherein the buoyant portions (4) of the cultivation cells (1) are aligned in a row so as to create, underneath the holes (3), channels (8) which cross the tray (100) from one side to the other.

4. The single-piece tray (100) according to any one of the preceding claims, wherein the channel (8) has a width of between 60 mm and 90 mm.

5. The single-piece tray (100) according to claim 3, wherein the channel (8) has width of about 75 mm.

6. The single-piece tray (100) according to any one of the preceding claims, wherein the housing (2) of each of said cultivation cells (1) is surmounted by a shelf (9) with holes and grooves (10) which radially branch off around the holes (3), said grooves (10) defining a slope for channelling and conveying, from peripheral zones of the cell (1), water sprayed onto the shelf (9) with holes and for allowing it to fall above the hole (3) of the respective housing (2).

7. The single-piece tray (100) according to any one of the preceding claims, wherein said hole (3) of each cultivation cell (1) has a substantially circular shape with a peripheral notch (11).

8. The single-piece tray (100) according to any one of the preceding claims in combination with claim 5, wherein the housing (2) is at least partially enclosed between protruding elements (12) which extend upwards from the shelf (9) with holes of the tray (1).

9. The single-piece tray (100) according to claim 8, wherein the protruding elements (12) are separate from each other.

10. The single-piece tray (100) according to claim 9, wherein said protruding elements (12) are situated opposite each other relative to the housing (2).

11. The single-piece tray (100) according to one of the preceding claims, realized as a single piece of plastic by means of a blow-moulding process.

12. The single-piece tray (100) according to any one of the preceding claims, wherein said channel (8) is defined by an indentation or recess or niche which extends from the side of said lowered plane (5) from the housing (2) towards the edge of the single-piece tray (100).

13. The single-piece tray (100) according to any one of the preceding claims, wherein said single-piece tray is a body in the form of a closed tank.

14. The single-piece tray (100) according to any one of the preceding claims, wherein the dimensions of the housings (2) of the cultivation cells (1) is determined depending on the surface area needed for the bulb or seedling to be grown; and/or wherein the distance between the housings (2) depends on the product which is to be matured and this will limit the maximum number of cultivations cells (1) in each tray (100); and/or wherein the distance between the holes (3) of the housings (2) for the bulbs and seedlings to be grown is conveniently calculated so as to optimize fully the useful spaces, considering also the fact that the tray (100) is designed to accommodate different plants; and/or wherein the holes (3) of the housings (2) are spaced so that, once the plants reached maturity, they are sufficiently spaced from each other so as not to hinder their natural growth.

15. The single-piece tray (100) according to any one of the preceding claims, wherein the tray (100) for hydroponic cultivation is provided with dimensions such that it can be used for different types of plant, including those which are **characterized by** final weights which are substantially different from each other, namely when the plants are mature and ready for harvesting.

16. Use of a single-piece tray (100) according to any one of claims 1 to 15 during hydroponic cultivation, in such a way that when the tray is placed on water:
- a first inner volume of the single-piece tray (100) remains below the waterline as soon as the bulb or seedling to be cultivated is placed in the cultivation cell,
- a second inner volume of the singlc-piccc tray (100) remains above the waterline when the bulb or seedling to be cultivated is placed in the cultivation cell and
sinks below the waterline completely when the bulb or seedling to be cultivated has become a mature plant,
- a third inner volume of the single-piece tray (100) remains above the waterline when the bulb or seedling to be cultivated has become a mature plant;
and the venting of carbon dioxide inside the channel (8) is permitted.

17. Method for hydroponic cultivation according to which seedlings or bulbs to be cultivated are housed inside cultivation cells (1) of a single-piece tray (100), wherein each cultivation cell (1) includes a housing (2) and a buoyant portion (4), wherein each housing (2) defines a raised plane (7) and is configured to house a bulb or seedling to be cultivated, said housing (2) having a hole (3) with dimensions such as to support the bulb or seedling to be cultivated without allowing it to fall through, while allowing its roots to protrude below the single-piece tray; and wherein the buoyant portion (4) defines a lowered plane (5) and is delimited by side walls (6) which extend upwards from the lowered plane (5) and are connected to said raised plane (7), and wherein the method envisages placing said single-piece tray (100) inside a tank containing water so that:
- a first inner volume of the single-piece tray (100) with a first height (h₁) remains below the waterline when the bulb or seedling to be cultivated is placed in the cultivation cell,
- a second inner volume of the single-piece tray (100) with a second height (h₂) remains above the waterline when the bulb or seedling to be cultivated is placed in the cultivation cell and sinks below the waterline completely when the bulb or seedling to be cultivated has become a mature plant;
- a third inner volume of the single-piece tray (100) with a third height (h₃) remains above the waterline when the bulb or seedling to be cultivated has become a mature plant;
wherein the sum of said first height (h₁), second height (h₂) and third height (h₃) corresponds to a height of the side walls (6) of the single-piece tray (100) between said raised plane (7) and said lowered plane (5) and wherein said side walls (6) form a channel (8) which allows the passage of gas or venting between each housing (3) and a space outside the single-piece.

## Patentansprüche

1. Eine einteilige Schale (100) für Hydrokultur, bestehend aus einem Kunststoff, der so geformt ist, dass er in der Schalen mehrere identische Pflanzzellen (1) bildet, wobei jede Pflanzzelle (1) über Folgendes verfügt:
- ein Gehäuse (2), welches eine erhöhte Ebene (7) bildet, die so geformt ist, dass sie die Zwiebel oder den Setzling aufnimmt und hält, die bzw. der kultiviert werden soll, wobei das Gehäuse (2) ein Loch (3) mit einer Größe hat, die gewährleistet, dass die Zwiebel oder die Pflanze, die kultiviert werden soll, gehalten wird, ohne durch das Loch zu fallen, während es den Wurzeln ermöglicht, unter aus der Schale herauszuragen;
- einen schwimmfähigen Bereich (4), welcher eine abgesenkte Ebene (5) bildet, die dafür gedacht ist, unter die Wasseroberfläche (Wasserlinie) zu sinken, wenn die Schale auf dem Wasser platziert wird, wobei dieser Bereich von den Seitenwänden (6) begrenzt ist, welche von der abgesenkten Ebene (5) nach oben reichen und mit der oben genannten erhöhten Ebene (7) verbunden sind, wobei jeder schwimmfähige Bereich (4) Folgendes definiert:
- ein erstes inneres Volumen mit einer ersten Höhe (h₁), welches so gestaltet ist, dass es unter der Wasserlinie bleibt, sobald die Zwiebel oder der Setzling, die bzw. der kultiviert wird, in der Pflanzzelle positioniert wird,
- ein zweites inneres Volumen mit einer zweiten Höhe (h2), welches so gestaltet ist, dass es über der Wasserlinie bleibt, wenn die Zwiebel oder der Setzling, die bzw. der kultiviert wird, in der Pflanzzelle positioniert wird, und komplett unter die Wasserlinie sinkt, wenn die Zwiebel oder der Setzling, die bzw. der kultiviert wird, eine reife Pflanze geworden ist,
- ein drittes inneres Volumen mit einer dritten Höhe (h3), welches so gestaltet ist, dass es über der Wasserlinie bleibt, wenn die Zwiebel oder der Setzling, die bzw. der kultiviert wird, eine reife Pflanze geworden ist;
- die Summe der ersten Höhe (h1), der zweiten Höhe (h2) und der dritten Höhe (h3) entspricht der Höhe der Seitenwände (6) zwischen der oben genannten erhöhten Ebene (7) und der oben genannten abgesenkten Ebene (5), wobei die oben genannten Seitenwände (6) mindestens bis zu einer freien Kante der einteiligen Schale 100 reichen und einen Kanal (8) bilden, der mit der Umgebung der einteiligen Schale (100) in Verbindung steht.

2. Die einteilige Schale (100) gemäß Anspruch 1, wobei die Seitenwände (6) zu den jeweils gegenüberliegenden Kanten der Schale reichen und der oben genannte Kanal (8) sich zwischen zwei gegenüberliegenden freien Kanten einer einteiligen Schale (100) erstreckt.

3. Die einteilige Schale (100) gemäß Anspruch 1 oder 2, wobei die schwimmfähigen Bereiche (4) der Pflanzzellen (1) in einer Reihe angeordnet sind, sodass sich unterhalb der Löcher (3) Kanäle (8) bilden, welche die Schale (100) von einer Seite zur anderen durchqueren.

4. Die einteilige Schale (100) gemäß einem der vorhergehenden Ansprüche, wobei der Kanal (8) eine Breite von 60 mm bis 90 mm hat.

5. Die einteilige Schale (100) gemäß Anspruch 3, wobei der Kanal (8) eine Breite von ca. 75 mm hat.

6. Die einteilige Schale (100) gemäß einem der vorhergehenden Ansprüche, wobei das Gehäuse (2) der oben genannten Pflanzzellen (1) von einer Abdeckung (9) mit Löchern und Rinnen (10) umgeben ist, welche sternförmig um das Loch (3) angeordnet sind, wobei die oben genannten Rinnen (10) ein Gefälle aufweisen, sodass sie das Wasser, das auf die Abdeckung (9) mit Löchern gesprüht wird, aus den umliegenden Bereichen der Zelle (1) zum Loch (3) des jeweiligen Gehäuses (2) leiten.

7. Die einteilige Schale (100) gemäß einem der vorhergehenden Ansprüche, wobei das oben genannte Loch (3) jeder Pflanzzelle (1) eine im wesentlichen runde Form mit einer Aussparung (11) am Umfang hat.

8. Die einteilige Schale (100) gemäß einem der vorhergehenden Ansprüche in Kombination mit Anspruch 5, wobei das Gehäuse (2) zumindest teilweise von vorstehenden Elementen (12) umgeben ist, die von der Abdeckungsoberfläche (9) mit Löchern der Schale (1) aufragen.

9. Die einteilige Schale (100) gemäß Anspruch 8, wobei die vorstehenden Elemente (12) voneinander getrennt sind.

10. Die einteilige Schale (100) gemäß Anspruch 9, wobei die vorstehenden Elemente (12) bezogen auf das Gehäuse (2) gegenüberliegend angeordnet sind.

11. Die einteilige Schale (100) gemäß einem der vorhergehenden Ansprüche, ausgeführt als ein Kunststoffteil aus einem Stück mit dem Blasformprozess.

12. Die einteilige Schale (100) gemäß einem der vorhergehenden Ansprüche, wobei der oben genannte Kanal (8) von einer Einbuchtung oder Einrückung oder Nische definiert wird, welche von der Seite der oben genannten abgesenkten Ebene (5) vom Gehäuse (2) zur Kante der einteiligen Schale (100) reicht.

13. Die einteilige Schale (100) gemäß einem der vorhergehenden Ansprüche, wobei die oben genannte einteilige Schale ein Körper ist, der die Form eines geschlossenen Behälters hat.

14. Die einteilige Schale (100) gemäß einem der vorhergehenden Ansprüche, wobei die Abmessungen der Gehäuse (2) der Pflanzzelle (1) anhand der Fläche festgelegt werden, die von der Zwiebel oder dem Setzling, die bzw. der kultiviert werden soll, benötigt wird; u/o wobei der Abstand zwischen den Gehäusen (2) vom kultivierten Produkt abhängt, was die maximale Anzahl an Pflanzzellen (1) pro Schale ~ (100) begrenzt; ~ u/o wobei der Abstand zwischen den Löchern (3) der Gehäuse (2) für die Zwiebeln und Setzlinge, die kultiviert werden, zweckdienlich so berechnet wird, dass der nutzbare Platz in vollem Umfang optimiert wird, auch unter Berücksichtigung der Tatsache, dass die Schale (100) darauf ausgelegt ist, unterschiedliche Pflanzen aufzunehmen; u/o wobei der Abstand der Löcher (3) der Gehäuse (2) gewährleistet, dass der Abstand zwischen den Pflanzen, wenn diese ihre Reife erreicht haben, ausreichend groß ist, sodass sie sich gegenseitig nicht in ihrem natürlichen Wachstum behindern.

15. Die einteilige Schale (100) gemäß einem der vorhergehenden Ansprüche, wobei die Schale (100) für Hydrokultur über Abmessungen verfügt, die die Schale für die Verwendung für verschiedene Pflanzenarten geeignet machen, auch für Pflanzen, deren Endgewicht sich deutlich unterscheidet, das heißt dann, wenn die Pflanzen reif sind und geerntet werden können.

16. Verwendung einer einteiligen Schale (100) gemäß einem der vorhergehenden Ansprüche 1 bis 15 für die Hydrokultur auf eine Weise, sodass bei Platzieren der Schale auf dem Wasser:
- ein erstes inneres Volumen der einteiligen Schale (100) unter der Wasserlinie bleibt, sobald die Zwiebel oder der Setzling, die bzw. der kultiviert wird, in der Pflanzzelle positioniert wird,
- ein zweites inneres Volumen der einteiligen Schale (100) über der Wasserlinie bleibt, wenn die Zwiebel oder der Setzling, die bzw. der kultiviert wird, in der Pflanzzelle positioniert wird,
- und unter die Wasserlinie sinkt, wenn die Zwiebel oder der Setzling, die bzw. der kultiviert wird, eine reife Pflanze geworden ist,
- ein drittes inneres Volumen der einteiligen Schale (100) über der Wasserlinie bleibt, wenn die Zwiebel oder der Setzling, die bzw. der kultiviert wird, eine reife Pflanze geworden ist;
- und die Entlüftung des Kohlendioxids im Kanal (8) gewährleistet ist.

17. Hydrokulturverfahren, bei dem die Setzlinge oder Zwiebeln, die kultiviert werden, in Pflanzzellen (1) in einer einteiligen Schale (100) positioniert sind, wobei jede Pflanzzelle (1) ein Gehäuse (2) und einen schwimmfähigen Bereich (4) umfasst, wobei jedes Gehäuse (2) eine erhöhte Ebene (7) bildet und darauf ausgelegt ist, die Zwiebel oder den Setzling aufzunehmen, die bzw. der kultiviert werden soll, wobei das Gehäuse (2) ein Loch (3) mit einer Größe hat, die gewährleistet, dass die Zwiebel oder der Setzling, die bzw. der kultiviert werden soll, gehalten wird, ohne durch das Loch zu fallen, während es den Wurzeln ermöglicht, unter aus der einteiligen Schale herauszuragen; und wobei der schwimmfähige Bereich (4) eine abgesenkte Ebene (5) bildet und von Seitenwänden (6) begrenzt ist, welche von der abgesenkten Ebene (5) nach oben reichen und mit der oben genannten erhöhten Ebene (7) verbunden sind, und wobei das Verfahren vorsieht, dass die oben genannte einteilige Schale (100) in einem Behälter mit Wasser positioniert wird, sodass:
- ein erstes inneres Volumen der einteiligen Schale (100) mit einer ersten Höhe (h₁) unter der Wasserlinie bleibt, wenn die Zwiebel oder der Setzling, die bzw. der kultiviert wird, in der Pflanzzelle positioniert wird,
- ein zweites inneres Volumen der einteiligen Schale (100) mit einer zweiten Höhe (h₂) über der Wasserlinie bleibt, wenn die Zwiebel oder der Setzling, die bzw. der kultiviert wird, in der Pflanzzelle positioniert wird, und komplett unter die Wasserlinie sinkt, wenn die Zwiebel oder der Setzling, die bzw. der kultiviert wird, eine reife Pflanze geworden ist,
- ein drittes inneres Volumen der einteiligen Schale (100) mit einer dritten Höhe (h₃) über der Wasserlinie bleibt, wenn die Zwiebel oder der Setzling, die bzw. der kultiviert wird, eine reife Pflanze geworden ist;
wobei die Summe der ersten Höhe (h1), der zweiten Höhe (h2) und der dritten Höhe (h3) der Höhe der Seitenwände (6) einer einteiligen Schale (100) zwischen der oben genannten erhöhten Ebene (7) und der oben genannten abgesenkten Ebene (5) entspricht, wobei die oben genannten Seitenwände (6) einen Kanal (8) bilden, welcher den Durchlass für Gas oder eine Entlüftung zwischen den einzelnen Gehäusen (3) und der Umgebung der einteiligen Schale erlaubt.

## Revendications

1. Un plateau monobloc (100) pour la culture hydroponique, composé d'une matière plastique façonnée de façon à définir, dans le plateau, une pluralité de cellules de culture identiques (1), chaque cellule de culture (1) comprenant :
- un logement (2) définissant un plan surélevé (7) et configuré pour abriter un bulbe ou un semis à cultiver, ledit logement (2) ayant un trou (3) de dimensions adaptées pour supporter le bulbe ou le semis à cultiver sans qu'il ne tombe, tout en permettant à ses racines de faire saillie au-dessous du plateau ;
- une partie flottante (4), définissant un plan abaissé (5) destiné à s'enfoncer sous une ligne de flottaison et, lorsque le plateau est placé sur l'eau, ladite partie est délimitée par des parois latérales (6), s'étendant vers le haut à partir du plan abaissé (5), et reliées audit plan surélevé (7). Chaque partie flottante (4) définissant :
- un premier volume intérieur avec une première hauteur (h1), destiné à rester sous la ligne de flottaison, dès que le bulbe ou le semis à cultiver est placé dans la cellule de culture,
- un deuxième volume intérieur avec une deuxième hauteur (h2), conçu pour rester au-dessus de la ligne de flottaison, lorsque le bulbe ou le semis à cultiver est placé dans la cellule de culture, et pour plonger complètement sous la ligne de flottaison, lorsque le bulbe ou le semis à cultiver a atteint sa maturité,
- un troisième volume intérieur avec une troisième hauteur (h3), conçu pour rester au-dessus de la ligne de flottaison, lorsque le bulbe ou le semis à cultiver a atteint sa maturité ;
- la somme des dites première hauteur (h1), deuxième hauteur (h2) et troisième hauteur (h3), correspondant à une hauteur des parois latérales (6) entre ledit plan surélevé (7) et ledit plan abaissé (5), et dans laquelle lesdites parois latérales (6) s'étendent au moins jusqu'à un bord libre du plateau monobloc (100) et définissent un canal (8) qui communique avec un espace à l'extérieur du plateau monobloc (100).

2. Le plateau monobloc (100) selon la revendication 1, dans laquelle les parois latérales (6) s'étendent respectivement aux bords opposés du plateau et ledit canal (8) s'étend entre deux bords libres opposés du plateau monobloc (100).

3. Le plateau monobloc (100) selon la revendication 1 ou 2, dans laquelle les parties flottantes (4) des cellules de culture (1) sont alignées en une rangée de façon à former, sous les trous (3), des canaux (8) qui traversent le plateau (100) d'un côté à l'autre.

4. Le plateau monobloc (100) selon n'importe laquelle des revendications précédentes, dans laquelle le canal (8) a une largeur comprise entre 60 mm et 90 mm.

5. Le plateau monobloc (100) selon la revendication 3, dans laquelle le canal (8) a une largeur d'environ 75 mm.

6. Le plateau monobloc (100) selon n'importe laquelle des revendications précédentes, dans laquelle le logement (2) de chacune des dites cellules de culture (1) est surmonté d'un rayon (9) avec des trous et des gorges (10) qui s'orientent radialement autour des trous (3), lesdites gorges (10) définissant une pente pour canaliser et convoyer l'eau pulvérisée sur le rayon (9) à trous, des zones périphériques de la cellule (1), et lui permettre de tomber dans le trou (3) du logement respectif (2).

7. Le plateau monobloc (100) selon n'importe laquelle des revendications précédentes, dans laquelle ledit trou (3) de chaque cellule de culture (1) a une forme fondamentalement circulaire avec une encoche périphérique (11).

8. Le plateau monobloc (100) selon n'importe laquelle des revendications précédentes en association à la revendication 5, dans laquelle le logement (2) est au moins partiellement entouré d'éléments saillants (12) qui s'étendent vers le haut à partir du rayon (9) à trous du plateau (1).

9. Le plateau monobloc (100) selon la revendication 8, dans laquelle les éléments saillants (12) sont séparés les uns des autres.

10. Le plateau monobloc (100) selon la revendication 9, dans laquelle les éléments saillants (12) sont à l'opposé l'un de l'autre sur le logement (2).

11. Le plateau monobloc (100) selon n'importe laquelle des revendications précédentes, fabriqué en tant que pièce unique en plastique au moyen d'un procédé de moulage par soufflage.

12. Le plateau monobloc (100) selon n'importe laquelle des revendications précédentes, dans laquelle ledit canal (8) est délimité par une indentation ou creux ou niche qui s'étend du côté dudit plan abaissé (5) du logement (2) vers le bord du plateau monobloc (100).

13. Le plateau monobloc (100) selon n'importe laquelle des revendications précédentes, dans laquelle ledit plateau monobloc est un corps ayant la forme d'un réservoir fermé.

14. Le plateau monobloc (100) selon n'importe laquelle des revendications précédentes, dans laquelle les dimensions des logements (2) des cellules de culture (1) sont déterminées en fonction de la surface nécessaire pour permettre au bulbe ou au semis de se développer ; et/ou dans laquelle la distance entre les logements (2) dépend du produit qui doit y pousser, ce qui limitera le nombre maximum de cellules de culture (1) dans chaque plateau ~ (100) ; ~ et/ou dans laquelle la distance entre les trous (3) des logements (2) pour les bulbes et les semis à cultiver est calculée de façon à optimiser totalement les espaces utiles, compte tenu du fait que le plateau (100) est conçu pour accueillir différentes plantes ; et/ou dans laquelle les trous (3) des logements (2) sont espacés de façon à ce que les plantes à maturité soient suffisamment éloignées les unes des autres pour ne pas entraver leur croissance naturelle.

15. Le plateau monobloc (100) selon n'importe laquelle des revendications précédentes, dans laquelle le plateau (100) pour la culture hydroponique a des dimensions qui permettent de l'utiliser pour différents types de plantes, y compris ceux qui se caractérisent par des poids finaux fondamentalement différents les uns des autres, notamment lorsque les plantes ont atteint la maturité et sont prêtes à être récoltées.

16. Emploi d'un plateau monobloc (100) selon n'importe laquelle des revendications de 1 à 15 pendant la culture hydroponique, de façon que lorsque le plateau est placé sur l'eau :
- un premier volume intérieur du plateau monobloc (100) reste au-dessous de la ligne de flottaison, dès que le bulbe ou le semis à cultiver est placé dans la cellule de culture,
- un deuxième volume intérieur du plateau monobloc (100) reste au-dessus de la ligne de flottaison, dès que le bulbe ou le semis à cultiver est placé dans la cellule de culture et
- s'enfonce totalement sous la ligne de flottaison, lorsque le bulbe ou le semis à cultiver a atteint sa maturité,
- un troisième volume intérieur du plateau monobloc (100) reste au-dessus de la ligne de flottaison, lorsque le bulbe ou le semis à cultiver a atteint sa maturité ;
- et l'évacuation du dioxyde de carbone dans le canal (8) soit possible.

17. Méthode pour la culture hydroponique selon laquelle les semis ou bulbes à cultiver sont logés dans des cellules de culture (1) d'un plateau monobloc (100), dans laquelle chaque cellule de culture (1) comprend un logement (2) et une partie flottante (4), dans laquelle chaque logement (2) détermine un plan surélevé (7) et est configuré pour abriter un bulbe ou un semis à cultiver ; ledit logement (2) comprend un trou (3) de dimensions adaptées pour supporter le bulbe ou le semis à cultiver sans qu'il ne tombe, tout en permettant aux racines de faire saillie sous le plateau monobloc ; et dans laquelle la partie flottante (4) détermine un plan abaissé (5) et est délimitée par de parois latérales (6) qui s'étendent vers le haut à partir du plan abaissé (5) et sont reliées audit plan surélevé (7), et dans laquelle la méthode envisage de placer ledit plateau monobloc (100) dans un réservoir contenant de l'eau de sorte que :
- un premier volume intérieur du plateau monobloc (100) avec une première hauteur (h1) reste au-dessous de la ligne de flottaison, lorsque le bulbe ou le semis à cultiver est placé dans la cellule de culture,
- un deuxième volume intérieur du plateau monobloc (100) avec une deuxième hauteur (h2), reste au-dessus de la ligne de flottaison, lorsque le bulbe ou le semis à cultiver est placé dans la cellule de culture et s'enfonce complètement sous la ligne de flottaison lorsque le bulbe ou le semis à cultiver a atteint sa maturité ;
- un troisième volume intérieur du plateau monobloc (100) avec une troisième hauteur (h3) reste au-dessus de la ligne de flottaison, lorsque le bulbe ou le semis à cultiver a atteint sa maturité ;
dans laquelle la somme des dites première hauteur (h1), deuxième hauteur (h2) et troisième hauteur (h3) correspond à une hauteur des parois latérales (6) du plateau monobloc (100) entre ledit plan surélevé (7) et ledit plan abaissé (5) et dans laquelle les dites parois latérales (6) forment un canal (8) permettant le passage du gaz ou la ventilation entre chaque logement (3) et un espace à l'extérieur du monobloc.
